# EUROPEAN PATENT APPLICATION

(11) **EP 1 315 166 A1**
(43) Date of publication of application: **28.05.2003**
(21) Application number: 02257888.4
(22) Date of filing: 14.11.2002
(51) Int. Cl.: G11B 33/02, G06F 1/18, H05K 5/02

(54) **Interchangeable bezel**

(30) Priority: 14.11.2001 US 2484
(71) Applicant: Hewlett-Packard Company, Palo Alto, CA 94304 (US)
(72) Inventor: Johnson, Kristianne E., 7C Fort Collins, CO 80525 (US)
(74) Representative: Powell, Stephen David

(57) **Abstract**

A product (10) comprises a base unit (12) comprising an enclosure (14) having a plurality of exterior surfaces (14a-14f) and a cosmetic bezel (18) is attachable to at least one of the exterior surfaces to cover at least a portion of the at least one of the exterior surfaces, the cosmetic bezel having a customer-specific design (22), the cosmetic bezel being interchangeable with other cosmetic bezels (218, 318) having other customer-specific designs (222, 322).

The bezel comprises a rear surface, and a plurality of spaced, snap-on fasteners (26, 224, 324) projecting rearwardly from the rear surface, the fasteners being adapted to be received and gripped by corresponding, spaced fastener receptacles (28) on the at least one of the exterior surfaces of the product.

## Description

The present invention pertains generally to product enclosures having cosmetic panels or bezels, and more particularly, to interchangeable, customized bezels for attachment to the enclosures of such products.

Products such as electronics and computing systems, including for example, media storage systems for storing data cartridges, are housed in enclosures including bezels that have cosmetic outer surfaces designed to be customer-specific. Presently, to change the appearance or cosmetic design of a bezel it is necessary to change the entire enclosure or large portions thereof, thus making OEM (original equipment manufacturer) customization difficult and expensive.

In accordance with one specific, exemplary, embodiment of the invention, there is provided a product comprising a base unit comprising an enclosure having a plurality of exterior surfaces. A cosmetic bezel is attachable to at least one of the exterior surfaces to cover at least a portion of the at least one of the exterior surfaces, the cosmetic bezel having a customer-specific design, the cosmetic bezel being interchangeable with other cosmetic bezels having other customer-specific designs.
In accordance with a specific aspect of the invention, there is provided a cosmetic bezel adapted to be attached to at least one of a plurality of exterior surfaces of a product to cover at least a portion of the at least one of the plurality of exterior surfaces. The bezel comprises an outer surface carrying a customer-specific design, a rear surface, and a plurality of spaced, snap-on fasteners projecting rearwardly from the rear surface, the fasteners being adapted to be received and gripped by corresponding, spaced fastener receptacles on the at least one of the exterior surfaces of the product.

The foregoing and other objects, features and advantages of the invention will be evident to those skilled in the art from the detailed description, below, taken together with the accompanying drawings, in which:
**FIG. 1** is a simplified, perspective view of an exemplary product in the form of an autoloader in accordance with a first embodiment of the invention, the autoloader including a bezel having a first, exemplary, design;
**FIG. 2** is a perspective view of a bezel in accordance with a second, exemplary, design for use in connection with the present invention; and
**FIG. 3** is a perspective view of a bezel in accordance with a third, exemplary, design for use in connection with the present invention.

It should be noted that although the present invention is illustrated using a particular product as an example, namely, a media storage system comprising an autoloader, it will be obvious to those skilled in the art that the teachings of the invention may be applied to any of a wide range of products. Accordingly, the present invention should not be regarded as limited to the particular product shown and described herein.

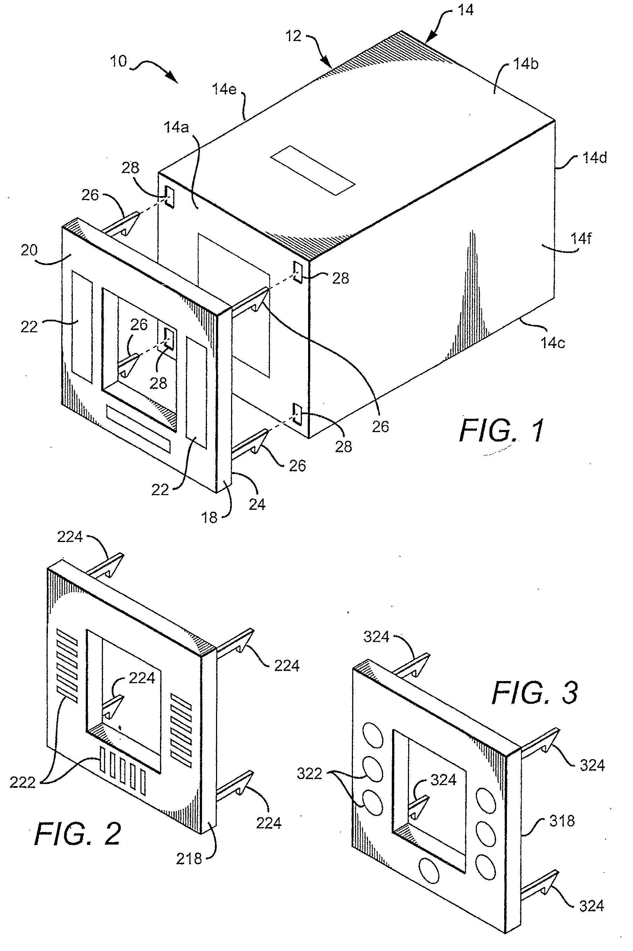

**FIG. 1** shows a product in the form of an autoloader 10 illustrating the utilization of the present invention. The autoloader 10 comprises a base unit 12 including cabinet or enclosure 14 having a plurality of exterior surfaces including a front surface 14a, a top surface 14b, a bottom surface 14c, a rear surface 14d and side surfaces 14e and 14f. In the exemplary embodiment of **FIG. 1**, the surface 14a is adapted to receive a cosmetic front panel or bezel 18 typically comprising a unitary molded plastic piece for covering at least a portion of the front surface 14a. The bezel 18 includes an outer surface 20 having distinctive indicia 22 which may include cosmetic or ornamental features and perhaps information identifying the end-user vendor. A product of the type illustrated is typically manufactured by an OEM which designs and sells the products to other companies for ultimate resale to end users. Although the base unit 12 comprising the enclosure 14 and the components housed therein is the same for all customers, the specific bezel attached to the front surface 14a will normally differ from customer to customer.
Projecting from a rear surface 24 of the bezel shown in **FIG. 1** is a plurality of spaced fasteners 26 which may, for example, take the form of plastic, rearwardly projecting barbed fasteners adapted to snap into place within receptacles 28 formed in the cabinet or enclosure 14. Thus, a bezel identified with a particular customer is simply snapped into place on the front of the enclosure 14 and the finished product is then ready for shipment.
**FIGS. 2** and **3** illustrate alternative bezels 218 and 318, respectively, having alternative ornamental or cosmetic features 222 and 322, respectively, on the front surfaces thereof associated with different customers. The bezels of **FIGS. 2** and **3,** like the bezel in **FIG. 1,** have a plurality of rearwardly projecting fasteners 224 and 324, respectively, in the form of plastic barbs positioned to be received by the fastener receptacles 28 formed in the front of the enclosure 14.
The various snap-on cosmetic bezels, each of which is associated with a different customer, can be attached to the base unit enclosure as a final step in the manufacturing process. Since no special tools or skills are required, this bezel attachment step may take place in a warehouse where products are stored awaiting shipment. When an order arrives from a specific customer, the cosmetic bezel for that customer is smply snapped in place on the spot giving the product the distinctive appearance required by the specific customer.

The snap-on cosmetic bezel of the invention eliminates the need for excessive inventory. If a product is designed in a manner requiring complicated assembly or the stocking of many different parts to alter a product's appearance, the OEM will need to carry extensive inventory for all of the different products. One of the advantages of the present invention is that inventories of the base units and the different cosmetic pieces are all that need to be kept on hand. This saves considerable time and money in the manufacturing process.
The distinguishing appearance of the bezels can, of course, be implemented in innumerable ways including, without limitation, by way of different colors, shapes, ornamental features and identifying indicia such as trademarks, company names, and so forth. The preference is that the various bezels have the same attachment points for improved interchangeability. The various bezels would all have the same general purpose of covering up any raw sheet metal, cables, and so forth, while at the same time providing a pleasing appearance and any customer-identifying information.
It will be obvious that consistent with the teachings of the invention, snap-on cosmetic bezels may be attached to the top surface 14b, bottom surface 14c, rear surface 14d, side surface 14e and/or side surface 14f and that any one or more of such surfaces may be covered by a bezel in whole or in part.
It further will be obvious that although a specific attachment means in the form of a plurality of spaced plastic barbs and associated receptacles has been shown, many types of fasteners are available for this purpose including, without limitation, unthreaded studs and stud receivers and specialized expedients such as Tinnerman fasteners, for permanent or releasable attachment of the bezel.

## Claims

1. A product (10) comprising:
a base unit (12) comprising an enclosure (14) having a plurality of exterior surfaces (14a-14f); and
a cosmetic bezel (18) attachable to at least one of the exterior surfaces to cover at least a portion of said at least one of said exterior surfaces, the cosmetic bezel having a customer-specific design (22), the cosmetic bezel being interchangeable with other cosmetic bezels (218, 318) having other customer-specific designs (222, 322).

2. The product of claim 1 in which:
said at least one of the exterior surfaces comprises a front surface (14a).

3. The product of claim 1 in which:
said at least one of the exterior surfaces comprises a top surface (14b).

4. The product of claim 1 in which:
said at least one of the exterior surfaces comprises a side surface (14e, 14f).

5. The product of claim 1 in which:
said at least one of the exterior surfaces comprises a bottom surface (14c).

6. The product of claim 1 in which:
said at least one of the exterior surfaces comprises a rear surface (14d).

7. A cosmetic bezel (18, 218, 318) adapted to be attached to at least one of a plurality of exterior surfaces (14a-14f) of a product (10) to cover at least a portion of said at least one of said plurality of exterior surfaces, the bezel comprising:
an outer surface carrying a design (22, 222, 322);
a rear surface; and
a plurality of spaced fasteners (26, 224, 324) projecting rearwardly from the rear surface, said fasteners being adapted to be received and gripped by corresponding, spaced fastener receptacles (28) on the at least one of said exterior surfaces of the product.

8. The bezel of claim 7 in which said fasteners are snap-on.

9. The bezel of claim 7 in which said fasteners are releasable.

10. The bezel of any of claims 7 to 9 in which said design (22, 222, 322) is customer-specific.
